# EUROPEAN PATENT APPLICATION

(11) **EP 1 630 024 A1**
(43) Date of publication of application: **01.03.2006**
(21) Application number: 05018067.8
(22) Date of filing: 19.08.2005
(51) Int. Cl.: B60J 10/04, B60J 10/06

(54) **Ascending/descending door glass support structure**

(30) Priority: 23.08.2004 JP 2004242919
(71) Applicant: Honda Motor Co., Ltd., Tokyo (JP)
(72) Inventor: Kawamura, Tohru, Wako-shi, Saitama (JP)
(74) Representative: Prechtel, Jörg

(57) **Abstract**

An ascending/descending door glass supporting structure includes a sash (12), a run channel (38) provided in the sash for guiding a door glass (16), and a slider (33) provided at a front edge and/or a rear edge of the door glass. An inner first lip (57), an inner second lip (64) and an inner third lip (67) formed on the run channel are directed toward a bottom (38b) of the run channel, facilitating assemblage of the door glass. The slider has a hook-shaped portion (33c) for hooking the inner second lip. Thus, the door glass is unlikely to escape and is reliably held.

## Description

This invention relates to a structure for supporting an ascending/descending door glass used in vehicles.

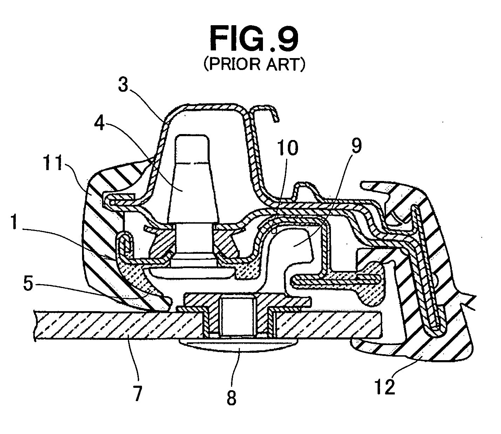

A structure for supporting an ascending/descending door glass has been proposed in, for example, JP-A-8-169236 according to which a slider is attached to the door glass, and is guided along a guide rail. The above ascending/descending door glass supporting structure will be described with reference to Fig. 9 hereof.

Referring to Fig. 9, a guide rail 1 for guiding a door glass 7 so as to slide is attached by using a fastening member 4 to a door frame 3 provided for a front door. The door glass 7 has a slider 9 attached to the edge portion thereof by using bolts 8. An end of the slider 9 is fitted in a guide groove 10 formed in the guide rail 1 so as to slide. The door glass 7 is supported via the slider 9 so as to ascend and descend along the guide rail 1. Reference numeral 5 denotes a lip-like member provided for the guide rail 1, and 11 and 12 denote sealing members.

In incorporating the door glass 7 in the guide rail 1, the opening portion of the guide groove 10 of the guide rail 1 is nearly equal to the width of an end of the slider 9, making it difficult to insert the slider in the guide groove 10. If the width of the opening portion of the guide groove 10 is selected to be greater than that of the slider 9, then, the slider 9 can be easily inserted in the guide groove 10 but becomes liable to easily escape from the guide groove 10.

As basic parts for supporting the door glass 7, further, there can be exemplified a door frame 3, a guide rail 1, a fastening member 4 for attaching the guide rail 1 to the door frame 3, a lip-like member 5, bolts 8, a slider 9, and sealing members 11, 12. From the standpoint of productivity and decreasing the cost, however, it is desired to decrease the number of parts.

In a state where the heads of bolts 8 are exposed to the outer side and the door glass 7 remains opened, further, the guide rail 4 and the fastening member 4 are exposed to the outer side, which is not desirable from the standpoint of appearance.

It is therefore desired to provide a support structure which facilitates the incorporation of the door glass, does not permit the door glass to easily escape, decreases the number of parts, and exhibits good appearance.

According to an aspect of the present invention, there is provided an ascending/descending door glass supporting structure which comprises: a sash provided on a door of a vehicle; a run channel provided in the sash for guiding an end of a door glass; and a slider provided at a front edge and/or a rear edge of the door glass and protruding in a fore-and-aft direction of the vehicle, wherein the slider has a hook-shaped portion with a distal end bent generally in a width direction of the vehicle, and the run channel is generally U-shaped in cross section to surround the slider and has a plurality of elastic lips oriented toward a bottom of the run channel to come in contact with the slider to produce a sealing effect.

In the support structure of this invention as described above, the plural elastic lips are directed to the bottom of the run channel, making it possible to easily insert the slider in the run channel and thus to easily incorporate the door glass into the door. In a state where the door glass is incorporated in the door, further, the hook-shaped portion hooks on the elastic lip, whereby the door glass does not easily escape from the door and is reliably held.

Further, the basic parts of the structure for supporting the door glass of the invention include the sash provided on the door, the run channel and the slider. With the run channel being integrally provided with a plurality of elastic lips for holding the slider, it is allowed to greatly decrease the number of parts as compared to the prior art.

The slider is attached to the door glass without using the conventional bolts that are exposed to the outer side. Thus, when the door glass is descended and opened, the run channel can be seen only from outer side, thus improving aesthetic appearance.

Desirably, one of the elastic lips is positioned closely to the hook-shaped portion and has hardness higher than that of other portions of the run channel. Therefore, the highly hard lip is hooked by the hook-shaped portion of the slider, and the door glass is unlikely to escape.

Preferably, the run channel has a lowly hard lip spaced a predetermined distance from the highly hard lip, the lowly hard lip having hardness smaller than that of the highly hard lip. Therefore, the lowly hard lip exhibits good follow-up performance and sealing performance and, further, exhibits improved sealing performance to the slider and improved holding force in cooperation with the highly hard lip.

Certain preferred embodiments of the present invention will now be described, by way of example only, with reference to the accompanying drawings, in which:
Fig. 1 is a side view of a vehicle employing an ascending/descending door glass supporting structure according to a first embodiment of the present invention;
Fig. 2 is a cross-sectional view, taken along line 2 - 2 of Fig. 1, showing the supporting structure according to the first embodiment;
Fig. 3 is a cross-sectional view showing an ascending/descending door glass supporting structure as a comparative example;
Fig. 4 is a cross-sectional view, taken along line 4 - 4 of Fig. 1, showing the supporting structure according to the first embodiment;
Fig. 5 illustrates the supporting structure as viewed from a direction of arrow 5 of Fig. 1;
Figs. 6A to 6C are views illustrating an operation of the ascending/descending door glass supporting structure according to the first embodiment;
Fig. 7 is a cross-sectional view of an ascending/descending door glass supporting structure according to a second embodiment;
Fig. 8 is a cross-sectional view of an ascending/descending door glass supporting structure according to a third embodiment; and
Fig. 9 is a sectional view illustrating a conventional ascending/descending door glass supporting structure.

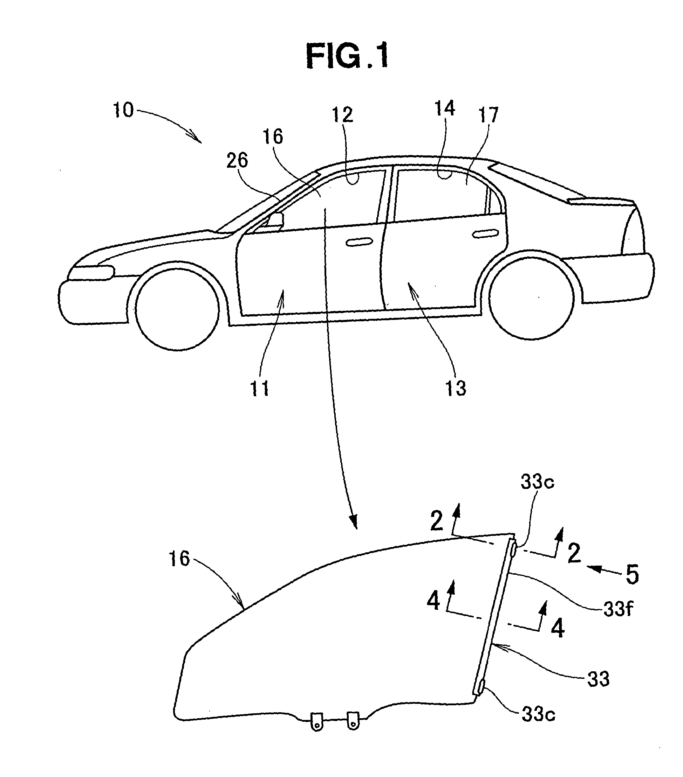

A vehicle 10 shown in Fig. 1 is a four-door type four-wheeled vehicle having a sash 12 in the right and left front doors 11, respectively, and having a sash 14 in the right and left rear doors 13, respectively.

The sash 12 supports a door glass 16 so as to ascend and descend. The sash 14 supports a door glass 17 so as to ascend and descend.

Reference numeral 26 denotes a front pillar.

The door glass 16 has a slider 33 attached to the rear edge thereof so as to slide relative to the sash 12. In the illustrated embodiment, the slider 33 is attached to the rear edge only of the door glass 16, but may be attached to at least either the front edge or the rear edge of the door glass 16. The same holds for the door glass 17, too.

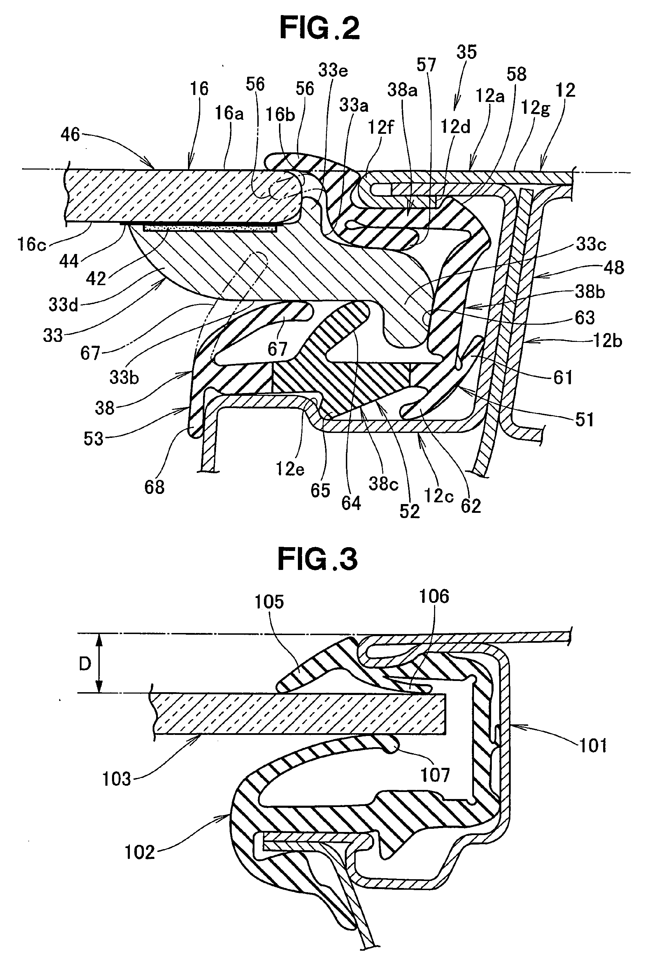

Fig. 2 is a sectional view of the structure for supporting the door glass according to the first embodiment.

A door glass support portion 35 for supporting the door glass 16 comprises a sash 12 made of a plurality of steel plates and having nearly a U-shape in cross section, a run channel 38 of nearly a U-shape in cross section made of a rubber held in the sash 12 of the U-shape in cross section, and a resin slider 33 inserted in the run channel 38 so as to slide and is held so will not to escape from the run channel 38.

The slider 33 is joined to the inner surface 16c of the door glass 16 with an adhesive 42. In order that the portion for attaching the slider 33 will not be seen through the door glass 16, a black paint 44 is applied to the inner surface of the door glass 16 so as to cover the adhesive 42 on the door glass 16.

From another point of view, when a door glass structure 46 is constituted by using the door glass 16 and the slider 33, the portion 48 for supporting the door glass structure which comprises the sash 12 and the run channel 38, works to support the door glass structure 46 in a manner to ascend and descend.

The sash 12 includes an outer portion 12a, a bottom portion 2b and an inner portion 12c, which are forming a U-shape in cross section.

The outer portion 12a has a first stepped portion 12d formed by joining two pieces of panels. The inner portion 12c has a second stepped portion 12e formed by bending the U-shaped opening side thereof toward the outer side of the vehicle.

The run channel 38 includes an outer portion 38a, a bottom portion 38b and an inner portion 38c, which are forming a U-shape in cross section. Concretely, the run channel 38 comprises a first member 51 constituted by the outer portion 38a, the bottom portion 38b and part of the inner portion 38c, a second member 52 constituting a majority portion of the inner portion 38c, and a third member 53. The first member 51, second member 52 and third member 53 are integrally formed together.

The first member 51 includes a glass-side lip 56 having an end that comes in contact with an end 12f of the outer portion 12a and with the outer surface 16a of the door glass 16, an inner first lip 57 that comes in contact with the outer surface 33a of the slider 33, a first swollen portion 58 that engages with the first stepped portion 12d of the sash 12, an outer first lip 61 that comes in contact with the bottom portion 12b of the sash 12, an outer second lip 62 that comes in contact with the inner portion 12c of the sash 12, and a bottom swollen portion 63 that comes in contact with a hook-shaped portion 33c formed like a hook at an end of the slider 33. The glass-side lip 56 represented by a dot-dash chain line is in a state of before being locked to come in contact with the outer surface 16a of the door glass 16.

The second member 52 includes an inner second lip 64 that has a hardness higher than that of the first member 51 and comes in contact with the inner surface 33b of the slider 33, and a second swollen portion 65 that engages with the second stepped portion 12e of the sash 12.

The third member 53 includes an inner third lip 67 that has a hardness same as that of the first member 51 and comes in contact with the inner surface 33b of the slider 33, and an outer third lip 68 that comes in contact with the inner portion 12c of the sash 12. The inner third lip 67 represented by a dot-dash chain line is in a state of before being locked to come in contact with the inner surface 33b of the slider 33.

The run channel 38 is held in the sash 12 as the first swollen portion 58 comes into engagement with the first stepped portion 12d and the second swollen portion 65 comes into engagement with the second stepped portion 12e.

A plurality of elastic lips, i.e., the inner first lip 57, inner second lip 64 and inner third lip 67, are directed to the bottom 38b of the run channel 38. Therefore, the slider 33 can be easily inserted in the run channel 38, and the door glass 16 can be easily incorporated in the front door 11 (see Fig. 1).

The inner first lip 57, inner second lip 64 and inner third lip 67 work to accomplish the sealing and holding by being pushed onto the slide 33 due to their elastic force. In particular, the inner second lip 64 is highly hard, producing a large elastic force and a large holding force.

The inner second lip 64 and the second swollen portion 65 of the second member 52 are highly hard, causing the run channel 38 itself to escape little from the sash 12, and strongly holds the door glass 16 via the slider 33.

The slider 33 includes a base portion 33d attached with an adhesive 42 to the inner surface 16c of the door glass 16, a hook-shaped portion 33c formed as an end extending from the base portion 33d in a direction toward the rear of the vehicle is folded in nearly the direction of width of the vehicle (up-and-down direction in the drawing), and a positioning protuberance 33e that comes in contact with the end surface 16b of the door glass 16 to determine the position for mounting the door glass 16.

Basic parts of the structure for supporting the door glass of the invention include the sash 12 provided in the front door 11 (see Fig. 1), run channel 38 and slider 33. By providing the run channel 38 with the plurality of elastic lips 57, 64, 67 integrally together to hold the slider 33, the number of parts can be greatly decreased.

In the structure for supporting the door glass of the invention, further, the run channel 38 only is seen from the outer side even when the door glass 16 is opened, exhibiting improved appearance.

Further, the run channel 38 has the inner third lip 67 having a hardness smaller than that of the inner second lip 64 with a predetermined distance from the inner second lip 64 of a high hardness, producing improved sealing performance for the slider 33 and increased force for holding the slider 33 in cooperation with the highly hard inner second lip 64.

Fig. 3 illustrates a comparative example of the ascending/descending door glass supporting structure. A run channel 102 is held on the inner side of a sash 101, and a door glass 103 is supported by the run channel 102 so as to ascend and descend.

Reference numerals 105, 106 and 107 denote lips formed on the run channel 102 for accomplishing the sealing and holding upon coming in contact with the door glass 103. Symbol D denotes an amount of step between the outer surface of the sash 101 and the outer surface of the door glass 103.

When the first embodiment shown in Fig. 2 is compared with the comparative example shown in Fig. 3, the embodiment makes it possible to accomplish a flush surface eliminating a step between the outer surface 12g of the sash 12 and the outer surface 16a of the door glass 16 in contrast to the comparative example. Further, even when the door glass 16 is forced to move in the fore-and-aft direction of the vehicle (in the right-and-left direction in the drawing), the hook-shaped portion 33c hooks on the inner second lip 64 so will not to be separated away, and the door glass 16 is reliably held. In particular, the inner second lip 64 is highly hard. Namely, the highly hard inner second lip 64 is hooked by the hook-shaped portion 33c, and the door glass 16 escapes further little.

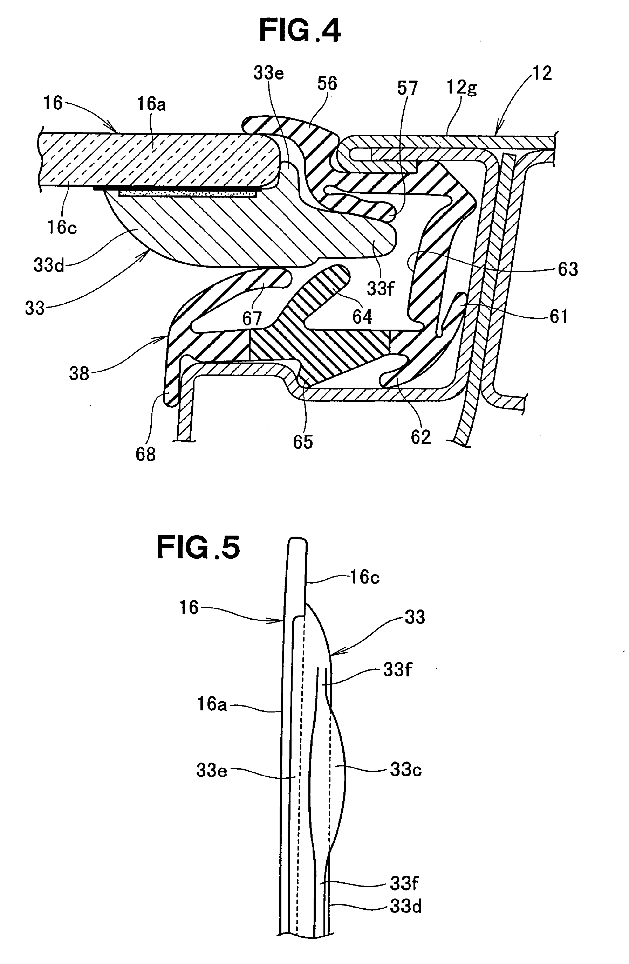

Referring to Fig. 4, the slider 33 at the central portion in the up-and-down direction has an extended portion 33f extending in the direction toward the rear of the vehicle from the base portion 33d.

The inner second lip 64 of the run channel 38 does not come in contact with the extended portion 33f. When the slider 33 ascends and descends, therefore, no frictional force is produced between the extended portion 33f and the inner second lip 64, and the slider 33 and the door glass 16 can be ascended and descended with a decreased driving force.

Fig. 5 illustrates a state where the hook-shaped portion 33c is formed near the end of the slider 33. The hook-shaped portion 33c is formed by curving an end so as to protrude inward of the vehicle (toward the right in the drawing). The extended portion 33f is continuous to the hook-shaped portion 33c.

Referring to Fig. 1, the slider 33 is provided with the hook-shaped portions 33c near the upper end and the lower end thereof only. The door glass 16 is held by the upper and lower hook-shaped portions 33c, 33c so will not to escape from the run channel 12. With the intermediate portion being shaped as represented by the extended portion 33f (see Fig. 4)(without hook-shaped portion 33c), further, it is allowed to ascend and descend the door glass 16 with a decreased driving force as well.

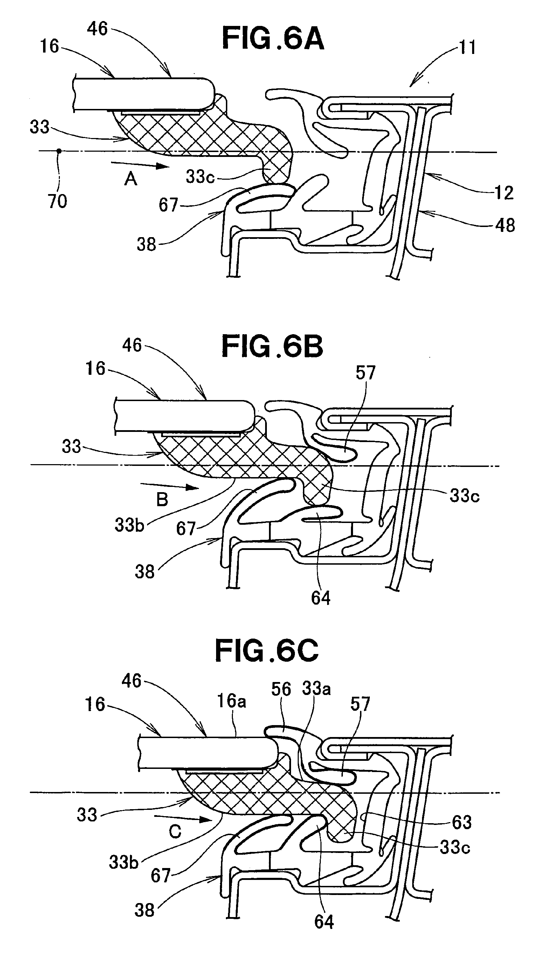

Next, described below with reference to Figs. 6A to 6C is how to incorporate the door glass structure 46 (door glass 16 to which the slider 33 is attached) in the front door 11 in the ascending/descending door glass supporting structure of the first embodiment.

In Fig. 6A as indicated by an arrow A, the door glass structure 46 is now going to be inserted in the run channel 38. First, the end of the hook-shaped portion 33c of the slider 33 (cross-hatched portion) comes in contact with the inner third lip 67 to push it away. A straight line 70 which is a dot-dash chain line is drawn through a predetermined position of the run channel 38 for easy comprehension of the movement of the slider 33.

In Fig. 6B as indicated by an arrow B, the door glass structure 46 is further inserted in the run channel 38. Then, the hook-shaped portion 33c of the slider 33 comes in contact with the inner first lip 57 and the inner second lip 64 to push them away. The inner third lip 67 comes in contact with the inner surface 33b of the slider 33.

In Fig. 6C, when the door glass structure 46 is further pushed into the run channel 38 as indicated by an arrow C, the inner second lip 64 comes in contact with the inner surface 33b of the slider 33 together with the inner third lip 67. Due to the elastic forces of the inner second lip 64 and the inner third lip 67, the slider 33 is pushed onto the inner first lip 57 to enhance the sealing performance.

The glass-side lip 56 comes in contact with the outer surface 16a of the door glass 16.

If the door glass structure 46 is further inserted in this state in the direction of the arrow C, the end of the hook-shaped portion 33c comes in contact with the bottom swollen portion 63 of the run channel 38, assuming a state shown in Fig. 2 to complete the incorporation.

Here, if an external force acts on, for example, the door glass structure 46 causing the door glass structure 46 to move toward the left in the drawing, the highly hard inner second lip 64 is hooked by the hook-shaped portion 33c, and the inner first lip 57 pushes the outer surface 33a of the slider 33, preventing the door glass structure 46 from moving.

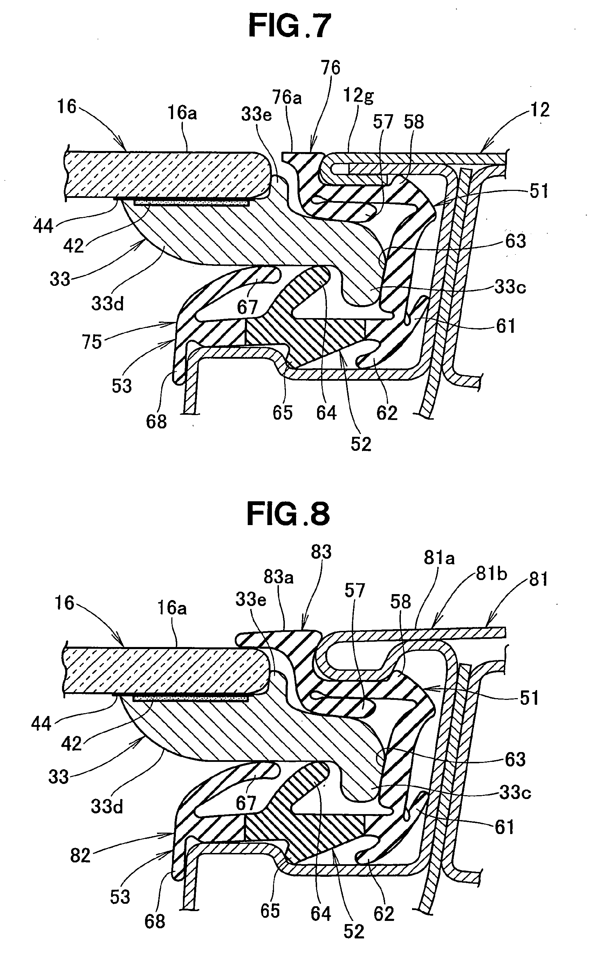

Fig. 7 illustrates the ascending/descending door glass supporting structure according to a second embodiment.

The protruding amount of the run channel 75 relative to the outer surface 16a of the door glass 16 and the outer surface 12g of the sash 12 is set to be smaller than that of the first embodiment.

The run channel 75 of the second embodiment is made of rubber, and a glass-side lip 76 only is changed relative to the run channel 38 (see Fig. 2) of the first embodiment. Namely, the outer surface 76a of the glass-side lip 76 is set to be nearly in flush with the outer surface 16a of the door glass 16 and with the outer surface 12g of the sash 12 to improve the appearance.

Fig. 8 illustrates the structure for supporting an ascending/descending door glass according to a third embodiment.

In the structure for supporting the door glass of the third embodiment, a sash 81 is provided on the front door, a run channel 82 is held in the sash 81, and the outer surface 81a of the sash 81, outer surface 83a of the glass-side lip 83 provided on the run channel 82 and the outer surface 16a of the door glass 16, are formed to be smoothly continuous to each other to improve the appearance.

The outer portion 81b of the sash 81 comes in contact with the back surface of the glass-side lip 83 of the run channel 82, and the end of the glass-side lip 83 is brought into contact with the outer surface 16a of the door glass 16 to maintain the sealing performance.

An ascending/descending door glass supporting structure includes a sash 12, a run channel 38 provided in the sash for guiding a door glass 16, and a slider 33 provided at a front edge and/or a rear edge of the door glass. An inner first lip 57, an inner second lip 64 and an inner third lip 67 formed on the run channel are directed toward a bottom 38b of the run channel, facilitating assemblage of the door glass. The slider has a hook-shaped portion 33c for hooking the inner second lip. Thus, the door glass is unlikely to escape and is reliably held.

## Claims

1. An ascending/descending door glass supporting structure comprising:
a sash (12) provided on a door (11) of a vehicle;
a run channel (38) provided in the sash for guiding an end of a door glass (16); and
a slider (33) provided at a front edge and/or a rear edge of the door glass in such a manner as to protrude in a fore-and-aft direction of the vehicle,
wherein the slider has a hook-shaped portion (33c) with a distal end bent in generally a width direction of the vehicle, and the run channel is generally U-shaped in cross section to surround the slider and has a plurality of elastic lips (57, 64, 67) oriented toward a bottom (38b) of the run channel to come into contact with the slider to produce a sealing effect.

2. The structure of claim 1, wherein one (64) of the elastic lips is positioned in close proximity to the hook-shaped portion (33c) and has hardness higher than that of other portions of the run channel.

3. The structure of claim 2, wherein the run channel has a lowly hard lip (67) spaced a predetermined distance from the highly hard lip and having hardness lower than that of the highly hard lip.
